# DEMANDE DE BREVET EUROPEEN

(11) **EP 3 415 805 A1**
(43) Date de publication de la demande: **19.12.2018**
(21) Numéro de dépôt: 18177371.4
(22) Date de dépôt: 12.06.2018
(51) Int. Cl.: F17C 11/00, C01C 1/00

(54) **DISPOSITIF DE STOCKAGE ET D'ALIMENTATION EN GAZ ET ENSEMBLE CORRESPONDANT**

(30) Priorité: 12.06.2017 FR 1755231
(71) Demandeur: Faurecia Systèmes d'Echappement, 92000 Nanterre (FR)
(72) Inventeur: BARTOLO, Xavier, Pierre, François, 25260 ETOUVANS (FR); GREBER, Frédéric, 25150 ECOT (FR); ROMAND, Claire, 90000 BELFORT (FR); BAVEREL, Christophe, 25400 AUDINCOURT (FR)
(74) Mandataire: Lavoix

(57) **Abrégé**

Le dispositif comprend :
- une chambre amont de stockage (13) contenant des particules (15);
- un organe de désorption (17) configuré pour désorber le gaz ab- ou adsorbé dans les particules (15);
- une ligne (25) d'alimentation en gaz, prévue pour être raccordée à l'organe consommateur de gaz (3), la ligne d'alimentation (25) comportant entre ses extrémités amont et aval (27, 31) un organe compresseur (41) agencé pour aspirer le gaz produit par l'organe de désorption (17) et maintenir l'organe de désorption (17) à une pression inférieure à la pression atmosphérique, et pour refouler le gaz vers l'organe consommateur de gaz (3).

## Description

L'invention concerne en général les dispositifs de stockage et d'alimentation en gaz d'un organe de consommateur de gaz, notamment les dispositifs de stockage et d'alimentation en ammoniac de lignes d'échappement de moteurs thermiques.

FR 2 991 595 décrit un dispositif de stockage et d'alimentation en ammoniac, comportant un stockage amont, et des particules disposées dans le stockage amont. Les particules comprennent un matériau solide prévu pour ab- ou adsorber l'ammoniac et de l'ammoniac ab- ou adsorbé par le matériau solide. Le dispositif comprend également une unité de chauffage permettant de chauffer le matériau solide et de désorber l'ammoniac, ainsi qu'une ligne d'alimentation en gaz dont une extrémité amont est raccordée à une sortie de gaz de l'unité de chauffage et une extrémité aval est raccordée à la ligne d'échappement.

La ligne d'alimentation est équipée d'un réservoir tampon de gaz, d'un organe d'injection prévu pour contrôler le débit de gaz injecté dans la ligne d'échappement, ainsi que d'une sonde de pression. L'organe de chauffage est piloté en fonction de la pression mesurée dans la ligne d'alimentation.

La ligne d'alimentation est maintenue à une pression nettement supérieure à celle de la ligne d'échappement, pour permettre l'injection du gaz.

Dans un tel dispositif, il est nécessaire de maintenir une excellente étanchéité au gaz, tout en assurant l'alimentation et l'extraction des particules. Ceci est d'autant plus difficile que la pression de gaz est élevée, et peut atteindre par exemple dix bars.

Dans ce contexte, l'invention vise à proposer un dispositif de stockage et d'alimentation qui ne présente pas les défauts ci-dessus.

A cette fin, l'invention porte sur un dispositif de stockage et d'alimentation en gaz d'un organe consommateur de gaz, le dispositif comprenant :
- une chambre amont de stockage ;
- des particules disposées dans la chambre amont de stockage, les particules comprenant un matériau solide prévu pour ab- ou adsorber le gaz et du gaz ab- ou adsorbé par le matériau solide ;
- un organe de désorption configuré pour désorber le gaz ab- ou adsorbé dans les particules ;
- une liaison amont raccordant une admission de l'organe de désorption à une sortie de la chambre amont, agencée pour que les particules circulent de la chambre amont à l'organe de désorption ;
- une ligne d'alimentation en gaz, ayant une extrémité amont raccordée à une sortie de gaz de l'organe de désorption et une extrémité aval prévue pour être raccordée à l'organe consommateur de gaz, la ligne d'alimentation comportant entre les extrémité amont et aval un organe compresseur agencé pour aspirer le gaz produit par l'organe de désorption et maintenir l'organe de désorption à une pression inférieure à la pression atmosphérique, et pour refouler le gaz vers l'organe consommateur de gaz.

L'utilisation d'un organe compresseur agencé dans la ligne d'alimentation permet donc de maintenir l'organe de désorption à une pression inférieure à la pression atmosphérique. Ainsi, il n'y a pas de risque de fuite de gaz vers l'extérieur du dispositif de stockage et d'alimentation.

Par ailleurs, l'organe compresseur permet d'obtenir facilement une pression d'injection supérieure à la pression de la ligne d'échappement.

L'exigence d'étanchéité n'est critique que pour la partie de la ligne d'alimentation allant de l'organe compresseur à l'organe consommateur de gaz. Pour le reste du dispositif, cette exigence est peu contraignante.

Le dispositif de stockage et d'alimentation en gaz peut également présenter une ou plusieurs des caractéristiques ci-dessous, considérées individuellement ou selon toutes les combinaisons techniquement possibles :
- le dispositif comporte une entrée d'air communiquant fluidiquement avec l'organe de désorption, et un organe de dosage passif ou actif configuré pour réguler un débit d'air entrant dans l'organe de désorption ;
- le dispositif comporte une chambre aval de stockage du matériau solide épuisé, et une liaison aval raccordant une évacuation de matériau solide de l'organe de désorption à une entrée de la chambre aval, l'entrée d'air débouchant dans la chambre aval ou dans la liaison aval ;
- l'organe de désorption comprend une enceinte délimitant un volume interne, les particules circulant dans le volume interne depuis une zone amont dans laquelle débouche l'admission jusqu'à une zone de chauffage, l'organe de désorption comprenant un refroidissement amont configuré pour refroidir les particules situées dans la zone amont ;
- l'organe de désorption comprend une enceinte délimitant un volume interne, le matériau solide circulant dans le volume interne depuis une zone de chauffage jusqu'à une zone aval, l'organe de désorption comprenant un refroidissement aval configuré pour refroidir le matériau solide situé dans la zone aval ;
- le dispositif comprend une ligne de décharge raccordée fluidiquement en dérivation sur un tronçon de la ligne d'alimentation situé en aval de l'organe compresseur ;
- la ligne de décharge est raccordée fluidiquement à une admission d'air d'un moteur thermique et/ou à un catalyseur de neutralisation du gaz, le dispositif comprenant un organe d'obturation configuré pour sélectivement adopter une position d'obturation de la ligne de décharge ou une position de dégagement de la ligne de décharge, l'organe compresseur étant susceptible d'adopter sélectivement une configuration normale dans laquelle l'organe compresseur refoule à une pression supérieure à 2 bar et une configuration de démarrage/arrêt dans laquelle l'organe compresseur refoule à une pression inférieure à 2 bar ;
- le gaz est de l'ammoniac et la ligne d'alimentation est équipée d'un chauffage ;
- le gaz est de l'ammoniac et la ligne d'alimentation est équipée d'un refroidissement configuré pour condenser l'ammoniac et l'injecter sous forme liquide vers l'organe consommateur de gaz.

Selon un second aspect, l'invention porte sur un ensemble comprenant une ligne d'échappement et un dispositif de stockage et d'alimentation en ammoniac ayant les caractéristiques ci-dessus, l'extrémité aval de la ligne d'alimentation en ammoniac étant raccordée à la ligne d'échappement.

Selon un troisième aspect, l'invention porte sur un ensemble comprenant un moteur thermique ayant une admission d'air, une ligne d'échappement agencée pour capter les gaz d'échappement provenant des chambres de combustion du moteur thermique, et un dispositif de stockage et d'alimentation en ammoniac ayant les caractéristiques ci-dessus, la ligne de décharge étant raccordée fluidiquement à l'admission d'air.

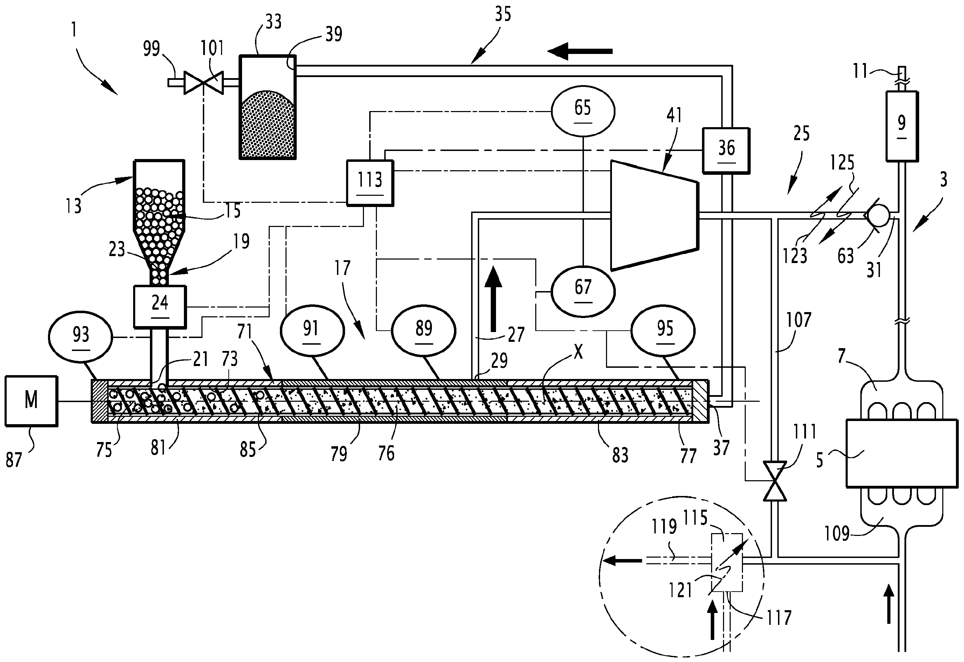

D'autres caractéristiques et avantages de l'invention ressortiront de la description détaillée qui en est donnée ci-dessous, à titre indicatif et nullement limitatif, en référence à la figure unique annexée, qui est une représentation schématique simplifiée du dispositif de stockage et d'alimentation en gaz de l'invention, alimentant la ligne d'échappement d'un moteur thermique.

Le dispositif 1 représenté sur la figure est destiné à stocker un gaz et à alimenter un organe consommateur avec ce gaz.

Le gaz est typiquement de l'ammoniac NH₃. En variante, le gaz est de l'hydrogène. Selon une autre variante, ce gaz est de toute autre sorte.

Quand le gaz est de l'ammoniac, l'organe consommateur alimenté en gaz par le dispositif 1 est typiquement une ligne d'échappement 3 d'un moteur thermique 5.

Ce moteur thermique est typiquement un moteur de forte puissance, propulsant un bateau de fort tonnage comme par exemple un pétrolier, ou un cargo, ou un porte-containers ou tout autre type de bateau de fort tonnage.

Les moteurs équipant de tels bateaux développent par exemple des puissances de l'ordre de 10 000 kW. Le débit d'ammoniac nécessaire pour un moteur de ce type est très élevé, et est compris typiquement entre 5 et 60 g/s. Les dispositifs de stockage et d'alimentation en ammoniac développés pour les voitures ne permettent pas d'obtenir ce débit. Ils fournissent un débit de l'ordre de 2 mg/s.

Le dispositif 1 a donc été conçu pour permettre le stockage de grandes quantités de gaz et l'alimentation en gaz à un fort débit.

En variante, le dispositif 1 alimente une ligne d'échappement 3 traitant les gaz d'échappement d'un moteur d'un bateau de petit tonnage, ou de tout autre véhicule tel qu'une voiture ou un camion.

La ligne d'échappement 3, comme visible sur la figure, comporte un collecteur 7 agencé pour collecter les gaz d'échappement sortant des chambres de combustion du moteur 5, et au moins un organe 9 de purification des gaz d'échappement de type SCR (Selective Catalytic Réduction, ou réduction catalytique sélective). L'organe de purification 9 est raccordé fluidiquement vers l'amont au collecteur 7 et vers l'aval à une canule 11 par laquelle les gaz d'échappement purifiés sont relargués dans l'atmosphère. La ligne d'échappement 3 comporte d'autres équipements, non représentés, tels que des silencieux ou d'autres organes de purification.

Le dispositif 1 est configuré pour injecter le gaz en amont de l'organe de purification 9, comme représenté sur la figure.

Dans la présente demande de brevet, l'amont et l'aval sont entendus relativement au sens de circulation des gaz ou des particules.

Dans l'organe de purification 9 de type SCR, les NOx contenus dans les gaz d'échappement sont réduits en azote gazeux et en eau, en présence d'ammoniac.

Le dispositif 1 de stockage et d'alimentation en gaz comporte une chambre amont de stockage 13, et des particules 15 disposées dans la chambre amont de stockage 13.

La chambre amont 13 est étanche au gaz. Elle est conçue pour protéger les particules 15 de l'environnement extérieur, notamment de l'humidité, des polluants, etc.

Les particules 15 comprennent un matériau solide prévu pour ab- ou adsorber le gaz, et du gaz ab- ou adsorbé dans le matériau solide.

Dans le cas où le gaz est de l'ammoniac, le matériau solide comporte de préférence au moins un sel ionique de forme générale MₐX_{z}, où M est un cation choisi parmi les métaux alcalins, les métaux alcalino-terreux ou les métaux de transition, X étant un anion. Le matériau de stockage correspond par exemple l'un des matériaux décrit dans la demande de brevet WO2008/077652.

M est typiquement sélectionné dans le groupe des métaux alcalins tels que de Li, La, K ou Cs. Alternativement, M est sélectionné dans le groupe des métaux alcalino-terreux tels que Mg, Ca ou Sr. Selon une autre possibilité, M est sélectionné dans le groupe des métaux de transition tels que V, Cr, Mn, Fe, Co, Ni, Cu ou Zn. M peut également être une combinaison de ces métaux tels que NaAI, KAI, ZnK, CsCu ou FeK.

X comprend un ou plusieurs anions sélectionnés dans le groupe comprenant les fluorures, les chlorures, les bromures, les iodures, les nitrates, les thiocyanates, les sulfates, les molybdates et les ions phosphates.
a est le nombre de cations par molécule de sel.
z est le nombre d'anions par molécule de sel.

Typiquement, il est possible d'ab- et/ou adsorber n molécule de NH₃ pour chaque molécule de sel ionique, n étant compris entre 2 et 12.

Avantageusement, le sel ionique est du type MgCl₂, SrCl₂ ou encore CaCl₂, ou est un mélange de ces éléments.

On entend par ab- et/ou adsorption la capacité de chaque molécule de sel ionique à fixer une ou plusieurs molécules de gaz, en créant une liaison avec chaque molécule de gaz. Cette liaison peut être de tout type, et en particulier Van der Waals, ionique et/ou covalente.

On entend par désorption la capacité du matériau solide à libérer les molécules de gaz, par exemple sous l'effet d'un chauffage.

Les particules 15 de matériaux solides peuvent avoir toute sorte de forme, et toute sorte de taille. Par exemple, elles ont un diamètre compris entre 300 micromètres et 15 millimètres quand elles sont chargées en gaz, et de préférence entre 1 et 15 millimètres.

Le dispositif 1 comporte encore un organe 17 de désorption configuré pour désorber le gaz ab- ou adsorbé dans les particules 15, et une liaison amont 19 raccordant une admission 21 de l'organe de désorption 17 à une sortie 23 de la chambre amont.

La liaison amont 19 est agencée pour que les particules 15 circulent de la chambre amont 13 à l'organe de désorption 17.

Avantageusement, la liaison amont 19 est agencée pour que les particules 15 circulent par gravité de la chambre amont 13 à l'organe de désorption 17. A cet effet, la sortie 23 est placée à une élévation supérieure à celle de l'admission 21. Typiquement, la sortie 23 est placée en partie inférieure de la chambre amont 13.

Typiquement, le dispositif 1 comporte un organe de dosage amont 24, configuré pour doser la quantité de particules 15 circulant par unité de temps depuis la chambre amont 13 jusqu'à l'organe de désorption 17 à travers la liaison amont 19.

Cet organe 24 est intercalé sur la liaison amont 19. Il est de tout type adapté : roue doseuse, vis doseuse, vis sans fin, vanne à tiroir, vanne écluse, vanne à manchon, vanne à piston, doseur volumétrique ou massique, ou tout autre type de vanne. L'organe de dosage amont 24 transfère les particules 15 à l'organe de désorption 17 par batch ou en continu.

Le dispositif 1 comporte encore une ligne 25 d'alimentation en gaz, ayant une extrémité amont 27 raccordée à une sortie de gaz 29 de l'organe de désorption 17, et une extrémité aval 31 raccordée à l'organe consommateur de gaz 3.

Typiquement, le dispositif 1 comporte encore une chambre aval 33 de stockage du matériau solide épuisé, et une liaison aval 35 raccordant une évacuation 37 de matériau solide de l'organe de désorption 17 à une entrée 39 de la chambre aval 33. Dans l'exemple représenté, la chambre amont 13 et la chambre aval 33 sont deux réservoirs distincts, séparés l'un de l'autre. En variante, la chambre amont 13 et la chambre aval 33 sont deux compartiments d'un même réservoir, séparés l'un de l'autre par une cloison étanche au gaz.

La chambre aval 33 est étanche au gaz. Elle est conçue pour protéger le matériau solide épuisé de l'environnement extérieur, notamment de l'humidité, des polluants, etc.

Avantageusement, le dispositif 1 comporte un organe de dosage aval 36, configuré pour doser la quantité de matériau solide épuisé circulant par unité de temps depuis l'organe de désorption 17 jusqu'à la chambre aval 33 à travers la liaison aval 35.

Cet organe est intercalé sur la liaison aval 35. Il est de tout type adapté : vis de transfert motorisée, roue doseuse, vis doseuse, vis sans fin, vanne à tiroir, vanne écluse, vanne à manchon, vanne à piston, doseur volumétrique ou massique, ou tout autre type de vanne. L'organe de dosage aval 36 transfère le matériau solide épuisé dans la chambre aval 33 par batch ou en continu.

Selon l'invention, la ligne d'alimentation 25 comprend entre les extrémités amont et aval 27, 31, un organe compresseur 41 agencé pour aspirer le gaz produit par l'organe de désorption 17 et maintenir l'organe de désorption 17 à une pression inférieure à la pression atmosphérique. L'organe compresseur 41 est également agencé pour refouler le gaz vers l'organe consommateur de gaz 3.

La pression dans l'organe de désorption 17 est typiquement comprise entre 100 et 300 mbar en-dessous de la pression atmosphérique.

La pression en aval de l'organe compresseur 41 est typiquement comprise entre 2 et 10 bars.

Plus précisément, l'organe compresseur 41 aspire et refoule un fluide qui est un mélange d'air et de gaz, comme expliqué plus bas.

L'organe compresseur 41 est de tout type adapté. Par exemple, l'organe compresseur 41 est un compresseur, un ventilateur ou une pompe.

Par exemple, l'organe compresseur 41 est un compresseur à pistons, à galets, à vis ou à membranes.

Par ailleurs, un clapet anti-retour 63 est placé dans la ligne d'admission 25, en aval de l'organe compresseur 41.

Le clapet anti-retour 63 permet d'éviter que les gaz d'échappement circulant dans la ligne d'échappement 3 remontent dans la ligne d'alimentation en gaz 25. En revanche, le gaz est injecté dans la ligne d'échappement 3 dès que la pression dans la ligne d'alimentation 25 est supérieure à la pression dans la ligne d'échappement 3.

La ligne d'alimentation 25 comporte encore un capteur 65 de débit de fluide dans la ligne 25, et un capteur 67 de mesure de la teneur en gaz dans le fluide circulant dans la ligne d'alimentation 25. Ces capteurs 65, 67 sont placés de préférence en amont de l'organe compresseur 41. On entend ici par teneur en gaz le ratio molaire entre le gaz et l'air.

Typiquement, l'organe de désorption 17 comprend une enceinte 71 délimitant un volume interne 73.

Les particules 15 circulent dans le volume interne 73 depuis une zone amont 75 dans laquelle débouche l'admission 21 jusqu'à une zone de chauffage 76. Le matériau solide épuisé circule dans le volume interne 73 depuis la zone de chauffage 76 jusqu'à une zone aval 77.

L'évacuation 37 débouche dans la zone aval 77.

Par ailleurs, l'organe de désorption 17 comprend un chauffage 79 configuré pour chauffer les particules 15 se trouvant dans la zone de chauffage 76

Le chauffage 79 est de tout type adapté. Par exemple, le chauffage chauffe les particules 15 par convection, par conduction, par ondes, par rayonnement ou par plusieurs de ces moyens combinés. Dans le cas des ondes, le chauffage peut être du type à micro-ondes, à induction ou de tout autre type adapté.

Avantageusement, l'organe de désorption 17 comprend un refroidissement amont 81 configuré pour refroidir les particules 15 se trouvant dans la zone amont 75. Le refroidissement amont 81 permet de limiter les transferts de chaleur vers le stockage amont 13.

Typiquement, l'organe de désorption 17 comprend également un refroidissement aval 83, configuré pour refroidir le matériau solide se trouvant la zone aval 77 du volume interne 73. Le refroidissement aval 83 permet de limiter les transferts de chaleur vers le stockage aval 33.

Le refroidissement amont et/ou aval est de tout type adapté. Il comporte par exemple une circulation d'un fluide caloporteur dans ou autour de l'enceinte 71.

Avantageusement, l'organe de désorption 17 est une vis chauffante. Le volume interne 73 est cylindrique, avec un axe central longitudinal X. L'organe de désorption 17 comprend une vis 85 logée dans le volume interne 73, et une motorisation 87 entraînant la vis 85 en rotation par rapport à l'enceinte 71 autour de l'axe central X pour transporter les particules 15 et le matériau solide épuisé.

La zone amont 75, la zone de chauffage 76 et la zone aval 77 sont des tronçons longitudinaux du volume interne 73. La zone de chauffage 76 est un tronçon longitudinalement central du volume interne 73. Les zones amont et aval 75 et 77 sont des tronçons d'extrémité, disposés de part et d'autre du tronçon central.

L'admission 21 se trouve à une extrémité longitudinale amont du volume interne 73 et débouche dans le volume interne 73. L'évacuation 37 de matériau solide est située à une extrémité longitudinale aval du volume interne 73 et débouche dans ce volume interne 73.

Ainsi, la vis 85 permet de faire progresser les particules longitudinalement depuis l'admission 21 dans le tronçon chauffé longitudinalement central, puis de faire progresser le matériau solide épuisé depuis le tronçon longitudinalement central jusqu'à l'évacuation 37.

La zone amont 75 s'étend à partir de l'extrémité longitudinale amont, jusqu'au tronçon longitudinalement central, chauffé par le chauffage 79.

La zone aval 77 s'étend depuis le tronçon longitudinalement central chauffé par le chauffage 79 jusqu'à l'extrémité longitudinale aval.

La sortie de gaz 29 est située à l'extrémité du tronçon longitudinalement central jouxtant le tronçon d'extrémité longitudinale aval.

En variante, l'organe de désorption 17 n'est pas une vis chauffante mais est de tout autre type adapté.

Le dispositif 1 comprend un capteur de pression 89, agencé pour mesurer la pression en amont de l'organe compresseur 41. Le capteur 89 est typiquement monté sur la ligne d'alimentation en gaz 25.

Le dispositif 1 comporte également un capteur de température 91, agencé pour mesurer la température dans la zone de chauffage 76. Typiquement, il comporte encore des capteurs de températures 93 et 95, agencés pour mesurer la température dans la zone amont 75 et dans la zone aval 77.

De plus, le dispositif 1 comporte une entrée d'air 99 communicant fluidiquement avec l'organe de désorption 17, et un organe de dosage d'air passif ou actif 101 configuré pour réguler un débit d'air entrant dans l'organe de désorption 17.

L'organe de dosage 101 est par exemple une vanne, ou un orifice calibré, ou un diaphragme, etc.

L'entrée d'air 99 débouche, dans l'exemple représenté, dans la chambre de stockage aval 33. L'organe de dosage 101 est une vanne réglante, placée sur l'entrée d'air 99. En variante, l'entrée d'air 99 débouche dans la liaison aval 35.

Avantageusement, le dispositif 1 comprend une ligne de décharge 107 raccordée fluidiquement en dérivation sur un tronçon de la ligne d'alimentation 25 située en aval de l'organe de compression 41.

L'extrémité de la ligne de décharge 107 est raccordée à une évacuation à une pression plus faible que la pression vue par l'extrémité aval 31 de la ligne d'alimentation 25.

Comme visible sur la figure, le moteur 5 comporte une admission d'air 109, agencée pour alimenter les chambres de combustion du moteur thermique 5 en air. Typiquement, la ligne de décharge 107 est raccordée fluidiquement à l'admission d'air 109.

Par ailleurs, la ligne de décharge 107 comporte un organe d'obturation 111 susceptible d'adopter sélectivement une position d'obturation de la ligne de décharge 107 et une position de dégagement de la ligne de décharge 107. L'organe d'obturation 111 est piloté par le contrôleur 113. L'organe d'obturation 111 est par exemple une vanne commandée.

Ainsi, la ligne de décharge 107 est agencée pour sélectivement décharger le gaz provenant de l'organe de désorption 17 hors du dispositif de stockage et d'alimentation 1 et hors de l'organe consommateur de gaz 3.

De plus, l'organe compresseur 41 est susceptible d'adopter sélectivement une configuration normale dans laquelle l'organe compresseur 41 refoule à une pression supérieure à 2 bars absolus et une configuration de démarrage/arrêt dans laquelle l'organe compresseur 41 refoule à une pression inférieure à 2 bars absolus.

L'organe compresseur 41 assure une simple circulation de l'air et du gaz vers l'organe consommateur de gaz, sans compression.

Le dispositif 1 comporte encore un contrôleur 113, configuré pour commander l'organe compresseur 41. Le contrôleur 113 pilote également un ou plusieurs des éléments suivants : l'organe de dosage amont 24, l'organe de dosage aval 36, l'organe de dosage d'air 101 et l'organe d'obturation 111. Les différents capteurs du dispositif 1 renseignent le contrôleur 113.

Le contrôleur 113 pilote de préférence également un ou plusieurs des éléments suivants : la motorisation 87, le chauffage 79, le refroidissement amont 81 et le refroidissement aval 83.

Le fonctionnement du dispositif 1 va maintenant être détaillé.

Quand le moteur 5 fonctionne dans des conditions stables, typiquement à une vitesse de rotation stable, le contrôleur 113 maintient l'organe d'obturation 111 fermé. Il pilote l'organe de dosage amont 24 de manière à alimenter l'organe de désorption 17 avec une masse de particules 15 par unité de temps correspondant à une consigne de besoin en gaz. Il maintient l'organe compresseur 41 dans sa configuration normale.

Cette consigne de besoin en gaz est fournie au contrôleur 113 par le calculateur pilotant le moteur 5. Elle correspond par exemple à la quantité de gaz permettant de réduire entièrement les NOx contenus dans le flux de gaz d'échappement émis par le moteur 5, compte tenu de son régime de fonctionnement courant.

Le contrôleur 113 détermine le débit massique de particules 15 par exemple par calcul, en utilisant la consigne de besoin en gaz et une quantité de gaz ab- ou adsorbé par unité de masse de particules 15. Cette quantité est prédéterminée et est stockée dans la mémoire du contrôleur 113.

Le contrôleur 113 contrôle la température dans la zone de chauffage 76 dans une fourchette prédéterminée, permettant la désorption du gaz. Dans le cas de l'ammoniac, la température est par exemple contrôlée entre 100°C et 500°C, de préférence entre 250°C et 420°C, encore de préférence entre 380°C et 400°C. Pour ce faire, le contrôleur 113 lit la température sur le capteur de température 91, et agit sur le chauffage 79 pour maintenir la température dans la fourchette prédéterminée.

Le contrôleur 113 pilote également l'organe de désorption 17 de manière à assurer la circulation des particules 15 de la zone amont 75 à la zone de chauffage 76 et la circulation du matériau solide épuisé de la zone de chauffage 76 à la zone aval 77. Notamment, il contrôle la vitesse de déplacement des particules 15 le long de la zone de chauffage 76 de manière à ce que le temps de séjour des particules 15 dans la zone de chauffage 76 soit suffisamment long pour permettre une désorption complète du gaz.

Quand l'organe de désorption 17 est une vis du type représenté sur la figure, le contrôleur 113 pilote la motorisation 87 pour entraîner la vis 85 en rotation à une vitesse de rotation déterminée par le contrôleur 113. Les particules 15 qui se trouvent déjà dans la zone amont 75 sont transférées vers la zone de chauffage 76. En conséquence, de nouvelles particules 15 peuvent s'écouler depuis la chambre de stockage amont 13 jusqu'à l'admission 21, à travers la liaison amont 19.

Les particules 15 progressant dans la zone de chauffage 76 sont chauffées par le chauffage 79, et le gaz est désorbé sous l'effet de la chaleur.

Le contrôleur 113 contrôle le refroidissement amont 81, de manière à maintenir les particules 15 se trouvant dans la zone amont 75 dans une fourchette de température déterminée. Cette fourchette de température est choisie pour empêcher le dégazage du gaz avant que les particules 15 n'atteignent le tronçon chauffé. Ceci contribue à empêcher le gaz de remonter vers la chambre de stockage amont 13. Ceci permet également d'empêcher les transferts de chaleur vers la chambre de stockage amont 13, qui pourrait provoquer le dégazage des particules 15 stockées dans cette chambre.

Dans le cas où le gaz est de l'ammoniac, le contrôleur 113 régule par exemple la température dans le tronçon d'extrémité longitudinalement amont entre 80°C et 130°C. Le contrôleur 113 lit la température sur le capteur de température 93, et agit sur le refroidissement amont 81 pour maintenir la température dans la fourchette prédéterminée.

Le contrôleur 113 contrôle le refroidissement aval 83 de manière à refroidir progressivement le matériau solide qui quitte la zone de chauffage 76. Typiquement, le matériau solide arrivant à l'évacuation 37 est sensiblement à température ambiante. Le contrôleur 113 lit la température sur le capteur de température 95, et agit sur le refroidissement aval 83 pour maintenir le matériau solide sortant par l'évacuation sensiblement à température ambiante.

Le contrôleur 113 pilote l'organe de dosage aval 36 pour évacuer la totalité du matériau solide épuisé sortant de l'organe de désorption 17 jusqu'au stockage aval 33.

L'organe compresseur 41 aspire le gaz produit par l'organe de désorption 17, et le refoule sous pression vers l'organe de purification 9.

Le fonctionnement de l'organe compresseur 41 est contrôlé par le contrôleur 113, de manière à maintenir la teneur en gaz dans le fluide circulant dans la ligne d'alimentation 25 à un point de consigne.

Pour ce faire, le contrôleur 113 lit la teneur en gaz mesurée par le capteur 67, et choisit la vitesse de rotation de l'organe compresseur 41 et la position de l'organe de doage d'air 101 en fonction de la teneur mesurée.

L'air entrant dans le dispositif 1 provient des défauts d'étanchéité et de l'entrée d'air 99. Le débit d'air entrant est fixe, et est déterminé par la position de l'organe de dosage d'air 101. La teneur en gaz est régulée en modifiant la vitesse de l'organe compresseur 41, ce qui permet d'ajuster le débit de gaz provenant de l'organe de désorption 17 et donc le ratio entre le débit de gaz et le débit d'air.

Le contrôleur 113 pilote l'organe compresseur 41 de manière à maintenir la pression dans la ligne d'alimentation 25, en amont de l'organe compresseur 41, inférieure à une pression maximum prédéterminée. La pression maximum prédéterminée est par exemple de 950 mbars absolus.

Pour cela, le contrôleur 113 lit la pression en amont de l'organe compresseur 41 en utilisant le capteur de pression 89, et agit sur la vitesse de rotation de l'organe compresseur 41.

Le fonctionnement au démarrage du dispositif 1 et à l'arrêt du dispositif 1 va maintenant être détaillé. Les phases transitoires, où le point de fonctionnement du dispositif 1 évolue rapidement, sont gérées de la même façon.

Le démarrage du dispositif 1 est effectué selon le procédé suivant.

On considère que le dispositif de stockage et d'alimentation en gaz 1 est initialement dans la situation où l'organe de désorption 17 est à l'arrêt, l'organe compresseur 41 étant lui aussi à l'arrêt.

On entend par là que l'organe de désorption 17 ne produit pas de gaz, et que l'organe compresseur 41 n'aspire pas d'air et de gaz. Le chauffage 79 notamment est arrêté.

Les organes de dosage amont 24 et aval 36 sont également à l'arrêt, le dispositif de désorption 17 n'étant pas alimenté en particules 15.

Le contrôleur 113 place d'abord l'organe d'obturation 111 dans la position de dégagement de la ligne de décharge 107.

Puis, le contrôleur 113 commande le démarrage du chauffage 79. La zone de chauffage 76 monte alors en température.

Le contrôleur 113 commande le démarrage de l'organe compresseur 41, dans la configuration de démarrage/arrêt.

L'organe compresseur 41 aspire le milieu gazeux remplissant l'organe de désorption 17, et le refoule à faible pression dans la ligne de décharge 107. Ce milieu gazeux contient de l'air et des traces de gaz. Le milieu gazeux est dirigé vers le collecteur d'admission 109, et n'est donc pas rejeté à l'extérieur.

Pour la mise à l'arrêt du dispositif 1, on considère que, initialement, l'organe de désorption 17 est en fonctionnement, et produit du gaz.

Le contrôleur 113 arrête le chauffage 79, de manière à faire baisser la température de la zone de chauffage 76. Il arrête également les organes de dosage amont 24 et aval 36.

Dans le même temps, le contrôleur 113 bascule l'organe compresseur 41 dans sa configuration de démarrage/arrêt, et fait passer l'organe d'obturation 111 dans sa position de dégagement de la ligne de décharge 107. Tout le gaz produit par l'organe de désorption 17 est dirigé vers l'admission d'air 109.

Selon une variante de réalisation, le dispositif 1 comprend un catalyseur de neutralisation du gaz 115, alimenté par la ligne de décharge 107. Ce catalyseur est représenté en traits interrompus sur la figure.

Ce catalyseur est prévu pour oxyder le gaz pendant les phases de démarrage et de mise à l'arrêt du dispositif 1. Quand le gaz est de l'ammoniac, le NH₃ en présence d'air est décomposé en NOₓ et/ou en N₂ et en H₂O.

Une extrémité aval de la ligne de décharge 107 est raccordée au catalyseur de neutralisation 115. Celui-ci comporte également une alimentation en air 117, et une sortie 119 de rejet des produits de décomposition du gaz.

Le catalyseur de neutralisation 115 est équipé d'un chauffage 121, piloté par le contrôleur 113. Le chauffage 121 est activé pendant les phases de démarrage et de mise à l'arrêt du dispositif 1.

Le catalyseur de neutralisation 115 est prévu en plus ou à la place du raccordement de la ligne de décharge 107 au collecteur d'admission d'air 109.

Selon une autre variante avantageuse, la ligne d'alimentation 25 est équipée d'un chauffage 123. Le chauffage 123 est agencé de manière à chauffer un tronçon de la ligne d'alimentation 25 situé entre le compresseur 41 et l'extrémité aval 31. Le chauffage 123 est particulièrement avantageux quand le gaz est de l'ammoniac. Il est prévu pour éviter toute condensation du gaz dans la ligne d'alimentation 25.

Selon une autre variante avantageuse, la ligne d'alimentation 25 est équipée d'un refroidissement 125. Le refroidissement 125 est agencé de manière à refroidir un tronçon de la ligne d'alimentation 25 situé entre le compresseur 41 et l'extrémité aval 31. Le refroidissement 125 est particulièrement avantageux quand le gaz est de l'ammoniac. Il est prévu pour condenser l'ammoniac, celui-ci alimentant l'organe de purification 9 sous forme liquide.

## Revendications

1. Dispositif de stockage et d'alimentation en gaz d'un organe (3) consommateur de gaz, le dispositif (1) comprenant :
- une chambre amont de stockage (13);
- des particules (15) disposées dans la chambre amont de stockage (13), les particules (15) comprenant un matériau solide prévu pour ab- ou adsorber le gaz et du gaz ab- ou adsorbé par le matériau solide ;
- un organe de désorption (17) configuré pour désorber le gaz ab- ou adsorbé dans les particules (15);
- une liaison amont (19) raccordant une admission (21) de l'organe de désorption (17) à une sortie (23) de la chambre amont (13), agencée pour que les particules (15) circulent de la chambre amont (13) à l'organe de désorption (17);
- une ligne (25) d'alimentation en gaz, ayant une extrémité amont (27) raccordée à une sortie de gaz (29) de l'organe de désorption (17) et une extrémité aval (31) prévue pour être raccordée à l'organe consommateur de gaz (3), la ligne d'alimentation (25) comportant entre les extrémités amont et aval (27, 31) un organe compresseur (41) agencé pour aspirer le gaz produit par l'organe de désorption (17) et maintenir l'organe de désorption (17) à une pression inférieure à la pression atmosphérique, et pour refouler le gaz vers l'organe consommateur de gaz (3).

2. Dispositif selon la revendication 1, **caractérisé en ce que** le dispositif (1) comporte une entrée d'air (99) communiquant fluidiquement avec l'organe de désorption (17), et un organe de dosage passif ou actif (101) configuré pour réguler un débit d'air entrant dans l'organe de désorption (17).

3. Dispositif selon la revendication 2, **caractérisé en ce que** le dispositif (1) comporte une chambre aval (33) de stockage du matériau solide épuisé, et une liaison aval (35) raccordant une évacuation (37) de matériau solide de l'organe de désorption (17) à une entrée (39) de la chambre aval (33), l'entrée d'air (99) débouchant dans la chambre aval (33) ou dans la liaison aval (35).

4. Dispositif selon l'une quelconque des revendications précédentes, **caractérisé en ce que** l'organe de désorption (17) comprend une enceinte (71) délimitant un volume interne (73), les particules (15) circulant dans le volume interne (73) depuis une zone amont (75) dans laquelle débouche l'admission (21) jusqu'à une zone de chauffage (76), l'organe de désorption (17) comprenant un refroidissement amont (81) configuré pour refroidir les particules (15) situées dans la zone amont (75).

5. Dispositif selon l'une quelconque des revendications précédentes, **caractérisé en ce que** l'organe de désorption (17) comprend une enceinte (71) délimitant un volume interne (73), le matériau solide circulant dans le volume interne (73) depuis une zone de chauffage (76) jusqu'à une zone aval (77), l'organe de désorption (17) comprenant un refroidissement aval (83) configuré pour refroidir le matériau solide situé dans la zone aval (77).

6. Dispositif selon l'une quelconque des revendications précédentes, **caractérisé en ce que** le dispositif (1) comprend une ligne de décharge (107) raccordée fluidiquement en dérivation sur un tronçon de la ligne d'alimentation (25) situé en aval de l'organe compresseur (41), la ligne de décharge (107) étant agencée pour sélectivement décharger le gaz provenant de l'organe de désorption (17) hors du dispositif de stockage et d'alimentation (1) et hors de l'organe consommateur de gaz (3).

7. Dispositif selon la revendication 6, dans lequel la ligne de décharge (107) est raccordée fluidiquement à une admission d'air (109) d'un moteur thermique (5) et/ou à un catalyseur de neutralisation du gaz (115), le dispositif (1) comprenant un organe d'obturation (111) configuré pour sélectivement adopter une position d'obturation de la ligne de décharge (107) ou une position de dégagement de la ligne de décharge (107), l'organe compresseur (41) étant susceptible d'adopter sélectivement une configuration normale dans laquelle l'organe compresseur (41) refoule à une pression supérieure à 2 bar(a) et une configuration de démarrage/arrêt dans laquelle l'organe compresseur (41) refoule à une pression inférieure à 2 bar(a)

8. Dispositif selon l'une quelconque des revendications 1 à 7, **caractérisé en ce que** le gaz est de l'ammoniac et **en ce que** la ligne d'alimentation (25) est équipée d'un chauffage (123).

9. Dispositif selon l'une quelconque des revendications 1 à 7, **caractérisé en ce que** le gaz est de l'ammoniac et **en ce que** la ligne d'alimentation (25) est équipée d'un refroidissement (125) configuré pour condenser l'ammoniac et l'injecter sous forme liquide vers l'organe consommateur de gaz (3).

10. Ensemble comprenant une ligne d'échappement (3) et un dispositif (1) de stockage et d'alimentation en ammoniac selon l'une quelconque des revendications 1 à 9, l'extrémité aval (31) de la ligne d'alimentation (25) étant raccordée à la ligne d'échappement (3).

11. Ensemble comprenant un moteur thermique (5) ayant une admission d'air (109), une ligne d'échappement (3) agencée pour capter les gaz d'échappement provenant des chambres de combustion du moteur thermique (5), et un dispositif (1) de stockage et d'alimentation en ammoniac selon la revendication 6, la ligne de décharge (107) étant raccordée fluidiquement à l'admission d'air (109).
